# EUROPÄISCHE PATENTSCHRIFT

(11) **EP 3 249 658 B1**
(45) Veröffentlichungstag und Bekanntmachung des Hinweises auf die Patenterteilung: **25.12.2019**
(21) Anmeldenummer: 17172758.9
(22) Anmeldetag: 24.05.2017
(51) Int. Cl.: H01B 7/42, B60R 16/02, F28D 20/02, H01B 7/00, B60K 1/00, C09K 5/06

(54) **ANORDNUNG MIT EINEM KRAFTFAHRZEUGKABELBAUM UND VERFAHREN**
ASSEMBLY COMPRISING A VEHICLE WIRE HARNESS AND METHOD
SYSTÈME COMPRENANT UN FAISCEAU DE CÂBLES DE VÉHICULE ET PROCÉDÉ

(30) Priorität: 24.05.2016 DE 102016109550
(43) Veröffentlichungstag der Anmeldung: 29.11.2017
(73) Patentinhaber: Yazaki Systems Technologies GmbH, 93059 Regensburg (DE)
(72) Erfinder: von Knorre, Dietrich, 27777 Ganderkesee (DE)
(74) Vertreter: Patentanwaltskanzlei WILHELM & BECK

(56) Entgegenhaltungen:
- EP-A2- 1 850 438
- EP-A2- 2 280 467
- CN-B- 103 745 772
- DE-A1-102009 021 287
- DE-T5-112008 002 265
- JP-A- H11 311 654
- JP-A- 2007 066 994
- JP-A- 2012 087 182
- US-A1- 2008 308 256
- US-A1- 2009 242 271

## Beschreibung

Die Erfindung betrifft eine Anordnung gemäß Patentanspruch 1 sowie ein Verfahren gemäß Anspruch 15.

Diese Patentanmeldung beansprucht die Priorität der deutschen Patentanmeldung DE 10 2016 109 550.8.

Aus der JP 2007 066 994 A ist eine elektrisches Kabel mit einem Wärmerohr bekannt.

Aus der EP 1 850 438 A2 ist eine Schutzvorrichtung, die eine Lastschaltung schützt, bekannt. Die Schutzvorrichtung schaltet Leistung in Abhängigkeit von einer geschätzten gegenwärtigen Temperatur einer Leitung ab.

Aus der US 2008/308256 A1 ist eine Kabelkühlvorrichtung zum Abführen von durch ein Kabel erzeugter Wärme bekannt, wobei die Kabelkühlvorrichtung ein Gehäuse umfasst, das zur Befestigung an mindestens einem Teil des Kabels konfiguriert ist. Das Gehäuse ist dazu konfiguriert, ein schmelzbares Material in einem ersten Zustand zu halten.

Aus der DE 10 2009 021 287 A1 ist ein Kabel mit einer elektrischen Leitung und einem Latentwärmespeicher bekannt. Wird dieses Kabel für einen Kraftfahrzeugkabelbaum in einem Kraftfahrzeug verwendet, so wird durch den Latentwärmespeicher der Kraftfahrzeugkabelbaum sehr schwer.

Es ist Aufgabe der Erfindung, eine besonders leichte Anordnung mit einem Kraftfahrzeugkabelbaum, so wie ein Verfahren zum Betrieb solch einer Anordnung bereitzustellen.

Diese Aufgabe wird mittels einer Anordnung gemäß Patenanspruch 1 und mittels eines Verfahrens gemäß Patentanspruch 15 gelöst. Vorteilhafte Ausführungsformen sind in den abhängigen Ansprüchen angegeben.

Gemäß einem Aspekt der Erfindung wurde erkannt, dass ein verbesserter Kraftfahrzeugkabelbaum dadurch bereitgestellt werden kann, dass der Kraftfahrzeugkabelbaum einen ersten Abschnitt, einen zweiten Abschnitt, wenigstens eine elektrische Leitung und wenigstens einen Latentwärmespeicher aufweist. Im zweiten Abschnitt ist der Latentwärmespeicher angeordnet. Der Latentwärmespeicher ist ausgebildet, Wärme von der elektrischen Leitung aufzunehmen und eine Überhitzung der elektrischen Leitung im zweiten Abschnitt zu vermeiden.

Diese Ausgestaltung hat den Vorteil, dass der Kraftfahrzeugkabelbaum besonders leicht ausgebildet ist, da auf den Latentwärmespeicher im ersten Abschnitt verzichtet werden kann. Dadurch weist der Kraftfahrzeugkabelbaum ein besonders niedriges Gewicht auf. Ferner wird durch den Latentwärmespeicher im zweiten Abschnitt die Überhitzung der elektrischen Leitung im zweiten Abschnitt vermieden.

In einer weiteren Ausführungsform weist der Latentwärmespeicher wenigstens einen der folgenden Werkstoffe auf: aliphatischen Kohlenwasserstoff, vorzugsweise mit 16 oder 17 oder 18 Kohlenstoffatomen, Salz, ionische Flüssigkeit, mikroverkapseltes Hartparaffin, Hartparaffin, thermochemischen Wärmespeicher. Vorteilhafterweise weist der Latentwärmespeicher eine Größe kleiner 50pm und größer 150 pm auf, wobei vorteilhafterweise die Größe in einem Bereich von 5 µm bis 20 µm liegt.

In einer weiteren Ausführungsform ist der Latentwärmespeicher schraubenförmig zum elektrischen Leiter verlaufend angeordnet oder ist der Latentwärmespeicher einem Verlauf des elektrischen Leiters folgend im Wesentlichen ausgerichtet.

In einer weiteren Ausführungsform weist der Kraftfahrzeugkabelbaum eine Ummantelung auf. Die Ummantelung umfasst einen Träger. Die elektrische Leitung weist wenigstens einen elektrisch leitend ausgebildeten elektrischen Leiter auf. Der Träger isoliert elektrisch den elektrischen Leiter. Der Latentwärmespeicher ist zwischen der Isolierschicht und dem elektrischen Leiter angeordnet. Zusätzlich oder alternativ ist der Träger zwischen dem Latentwärmespeicher und dem elektrischen Leiter angeordnet. In einer weiteren Ausführungsform weist der Träger wenigstens einen der folgenden Werkstoffe auf: Thermoplast, Polyolefin, Polyvinylidenfluorid, Polyvinylchlorid, Polytetrafluorethylen, Fluorelastomer, Polyisobutylen, wobei der Werkstoff ausgebildet ist, sich bei einer einmaligen Erwärmung zumindest um einen Faktor 2 zusammenzuziehen, faserverstärkten Kunststoff, offenporigen Schaum, geschlossenporigen Schaum, Schaum, Polypropylen, Polyethylen, vernetztes Polyethylen (PE-X), Polyurethan.

In einer weiteren Ausführungsform weist der Kraftfahrzeugkabelbaum eine Ummantelung auf. Die Ummantelung weist einen Träger auf. Der Träger weist vorzugsweise zumindest teilweise einen geschlossenporigen Werkstoff auf. Der Latentwärmespeicher ist in dem Träger angeordnet. Zusätzlich oder alternativ weist der Träger zumindest teilweise einen offenporigen Werkstoff auf. Der Träger ist mit dem Latentwärmespeicher imprägniert. Auf diese Weise kann eine besonders kompakte Ummantelung mit einem Latentwärmespeicher bereitgestellt werden.

In einer weiteren Ausführungsform weist die Ummantelung eine Klebschicht auf. Die Klebschicht ist zwischen der elektrischen Leitung und dem Träger angeordnet und verbindet stoffschlüssig den Träger mit der elektrischen Leitung.

In einer weiteren Ausführungsform weist die Ummantelung eine Schutzschicht auf. Die Schutzschicht ist auf dem Träger auf einer zur elektrischen Leitung abgewandten Seite angeordnet. Dadurch kann eine Beschädigung des Trägers und ggf. ein Austritt des Latentwärmespeichers aus dem Träger zuverlässig vermieden werden.

In einer weiteren Ausführungsform ist die Ummantelung bandartig und/oder schlauchartig und/oder schalenartig und/oder U-förmig und/oder in Längsrichtung wellenartig ausgebildet.

In einer weiteren Ausführungsform weist die Ummantelung eine erste Einlegeöffnung und der Latentwärmespeicher eine zweite Einlegeöffnung auf. Die erste Einlegeöffnung und die zweite Einlegeöffnung sind in Umfangsrichtung überlappend angeordnet. Der Latentwärmespeicher und die Ummantelung umgreifen umfangsseitig zumindest teilweise die elektrische Leitung.

In einer weiteren Ausführungsform weist der Träger wenigstens eine Tasche auf, wobei in der Tasche der Latentwärmespeicher angeordnet ist.

In einer weiteren Ausführungsform weist der Träger eine weitere Tasche auf, wobei in der weiteren Tasche ein weiterer Latentwärmespeicher angeordnet ist, wobei die Tasche und die weitere Tasche beabstandet zueinander angeordnet sind.

In einer weiteren Ausführungsform weist der Träger eine erste Trägerschicht und eine zweite Trägerschicht auf. Die erste Trägerschicht und die zweite Trägerschicht sind in einem ersten Trägerabschnitt miteinander verbunden. Zur Ausbildung der Tasche in einem zweiten Trägerabschnitt sind die erste Trägerschicht und die zweite Trägerschicht beabstandet zueinander angeordnet.

In einer weiteren Ausführungsform weist die elektrische Leitung einen weiteren elektrischen Leiter auf, wobei der Latentwärmespeicher zwischen dem elektrischen Leiter und dem weiteren elektrischen Leiter angeordnet ist, wobei vorzugsweise der Latentwärmespeicher zentrisch zu dem elektrischen Leiter und dem weiteren elektrischen Leiter angeordnet ist.

In einer weiteren Ausführungsform weist der Kraftfahrzeugkabelbaum eine weitere elektrische Leitung auf. Die elektrische Leitung und die weitere elektrische Leitung sind bündelartig verlaufend angeordnet, wobei angrenzend an die elektrische Leitung und/oder an die weitere elektrische Leitung der Latentwärmespeicher angeordnet ist.

In einer weiteren Ausführungsform weist die Anordnung ein wärmedämmendes und/oder schalldämmendes Dämmmaterial auf, wobei der erste Abschnitt von dem Dämmmaterial beabstandet angeordnet ist und der zweite Abschnitt in dem Dämmmaterial eingebettet ist.

In einer weiteren Ausführungsform weist die Anordnung wenigstens eine elektrische Einrichtung mit einer ersten Komponente, vorzugsweise einem Steuergerät, und einer zweiten Komponente auf, wobei die zweite Komponente einen elektrischen Verbraucher und eine Sicherungseinrichtung aufweist, wobei die elektrische Leitung des Kraftfahrzeugkabelbaums den Verbraucher mit der ersten Komponente elektrisch verbindet, wobei die Sicherungseinrichtung zwischen der ersten Komponente und dem Verbraucher angeordnet ist, wobei in einem Regelbetrieb die Sicherungseinrichtung die erste Komponente mit dem Verbraucher elektrisch verbindet, wobei nach Auftreten eines Fehlerfalls die Sicherungseinrichtung anspricht und die erste Komponente elektrisch von dem Verbraucher trennt, wobei in einem Zeitintervall zwischen Auftreten des Fehlerfalls bis zu dem Ansprechen der Sicherungseinrichtung sich die elektrische Leitung erwärmt, wobei der Latentwärmespeicher derart ausgebildet ist, dass ein Werkstoff des Latentwärmespeichers von der Wärme der elektrischen Leitung derart erwärmt wird, dass der Werkstoff von einem ersten Phasenzustand, in dem der Werkstoff im Regelbetrieb vorliegt, vorzugsweise einem festen Phasenzustand, in einen zweiten Phasenzustand, vorzugsweise in ein flüssigen Phasenzustand, überführt wird.

Es wurde erkannt, dass ein verbessertes Verfahren dadurch bereitgestellt werden kann, dass eine Anordnung wie oben beschrieben bereitgestellt wird, wobei in einem Regelbetrieb die Sicherungseinrichtung die erste Komponente mit dem Verbraucher elektrisch verbindet, wobei nach Auftreten eines Fehlerfalls die Sicherungseinrichtung anspricht und die erste Komponente elektrisch von der zweiten Komponente trennt, wobei in einem Zeitintervall zwischen Auftreten des Fehlerfalls bis zu dem Ansprechen der Sicherungseinrichtung sich die elektrische Leitung erwärmt, wobei der Latentwärmespeicher derart ausgebildet ist, dass ein Werkstoff des Latentwärmespeichers von der Wärme der elektrischen Leitung derart erwärmt wird, dass der Werkstoff von einem ersten Phasenzustand, in dem der Werkstoff im Regelbetrieb vorliegt, vorzugsweise einem festen Phasenzustand, in einen zweiten Phasenzustand, vorzugsweise in ein flüssigen Phasenzustand, überführt wird.

Nachfolgend wird die Erfindung anhand von Figuren näher erläutert. Dabei zeigen:
- Figur 1: eine perspektivische Darstellung eines Kraftfahrzeugs mit einer Anordnung mit einem Kraftfahrzeugkabelbaum gemäß einer ersten Ausführungsform;
- Figur 2: eine Schnittansicht durch eine Anordnung entlang einer in Figur 1 gezeigten Schnittebene A-A mit einem Kraftfahrzeugkabelbaum;.
- Figur 3: einen Querschnitt durch eine Anordnung mit einem Kraftfahrzeugkabelbaum gemäß einer zweiten Ausführungsform;
- Figur 4: einen Querschnitt durch eine Anordnung mit einem Kraftfahrzeugkabelbaum gemäß einer dritten Ausführungsform;
- Figur 5: einen Querschnitt durch eine Anordnung mit einem Kraftfahrzeugkabelbaum gemäß einer vierten Ausführungsform;
- Figur 6: einen Querschnitt durch eine Anordnung mit einen Kraftfahrzeugkabelbaum gemäß einer fünften Ausführungsform;
- Figur 7: einen Querschnitt durch eine Anordnung mit einem Kraftfahrzeugkabelbaum gemäß einer sechsten Ausführungsform;
- Figur 8: eine perspektivische Darstellung eines Ausschnitts eines Kraftfahrzeugkabelbaums gemäß einer siebten Ausführungsform;
- Figur 9: eine perspektivische Schnittansicht einer Abwicklung des in Figur 8 gezeigten Kraftfahrzeugkabelbaums;
- Figur 10: eine perspektivische Schnittansicht einer Abwicklung eines Kraftfahrzeugkabelbaums gemäß einer achten Ausführungsform;
- Figur 11: eine perspektivische Schnittansicht einer Abwicklung eines Kraftfahrzeugkabelbaums gemäß einer neunten Ausführungsform;
- Figur 12: einen Halblängsschnitt durch einen Kraftfahrzeugkabelbaum gemäß einer zehnten Ausführungsform; und
- Figur 13: einen Querschnitt durch den in Figur 12 gezeigten Kraftfahrzeugkabelbaum.

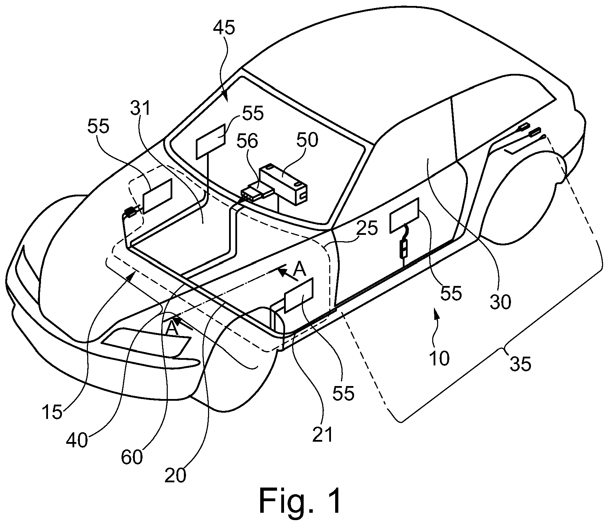

Figur 1 zeigt eine perspektivische Darstellung eines Kraftfahrzeugs 10.

Das Kraftfahrzeug 10 umfasst eine Anordnung 15. Die Anordnung 15 umfasst einen Kraftfahrzeugkabelbaum 20 gemäß einer ersten Ausführungsform und ein Dämmmaterial 25. Der Kraftfahrzeugkabelbaum 20 weist wenigstens eine elektrische Leitung 21 auf.

Das Dämmmaterial 25 ist beispielsweise im Bereich eines Armaturenbretts (in Figur 1 nicht dargestellt) angeordnet. Das Dämmmaterial 25 weist wärmedämmende und/oder schalldämmende Eigenschaften auf. Das Dämmmaterial 25 dient in der Ausführungsform dazu, einen Fahrgastinnenraum 30 des Kraftfahrzeugs 10 gegen ein Eindringen von Geräuschen aus einem Motorraum 31 des Kraftfahrzeugs 10 Schall zu isolieren. Auch kann das Dämmmaterial 25 den Fahrgastinnenraum 30 thermisch gegenüber dem Motorraum 31 isolieren.

Der Kraftfahrzeugkabelbaum 20 weist einen ersten Abschnitt 35 und einen zweiten Abschnitt 40 auf. Die elektrische Leitung 21 erstreckt sich über beide Abschnitte 35, 40. Im ersten Abschnitt 35 ist der Kraftfahrzeugkabelbaum 20 beabstandet zu dem Dämmmaterial 25 und außerhalb des Dämmmaterials 25 angeordnet. Dadurch ist der erste Abschnitt 35 umfangsseitig frei von Dämmmaterial 25. Im zweiten Abschnitt 40 ist der Kraftfahrzeugkabelbaum 20 in dem Dämmmaterial 25 eingebettet und/oder umgeben.

In der Ausführungsform dient beispielhaft der Kraftfahrzeugkabelbaum 20 dazu, zwischen Komponenten 50, 55 einer elektrischen Einrichtung 45 der Anordnung 15 des Kraftfahrzeugs 10 Datensignale und/oder elektrischer Energie auszutauschen.

In der Ausführungsform umfasst die elektrische Einrichtung 45 beispielhaft eine als erste Komponente ausgebildetes Steuergerät 50, einen als zweite Komponente ausgebildeten Verbraucher 55 und eine Sicherungseinrichtung 56. Der Verbraucher 55 kann beispielsweise eine elektrische Maschine aufweisen. Die elektrische Leitung 21 verbindet beispielhaft die erste Komponente 50 mit der zweiten Komponente 55 elektrisch, wobei elektrisch zwischen der ersten Komponente 50 und der zweiten Komponente 55 die Sicherungseinrichtung 56 angeordnet ist. Die Sicherungseinrichtung 56 ist ausgebildet im Regelbetrieb die erste Komponente 50 mit der zweiten Komponente 55 elektrisch zu verbinden. Bei einem Fehlerfall trennt die Sicherungseinrichtung 56 die elektrische Verbindung zwischen der ersten Komponente 50 und der zweiten Komponente 55.

Im Betrieb der elektrischen Einrichtung 45 wird zumindest ein elektrisches Signal zwischen der ersten Komponente 50 und der zweiten Komponente 55 mittels der elektrischen Leitung 21 des Kraftfahrzeugkabelbaums 20 übertragen. Das elektrische Signal führt zu einer Erwärmung der elektrischen Leitung 21 des Kraftfahrzeugkabelbaums 20. Dabei reduziert das Dämmmaterial 25 eine Wärmeabfuhr aus dem zweiten Abschnitt 40, sodass sich die elektrische Leitung 21 im zweiten Abschnitt 40 stärker erwärmt als im ersten Abschnitt 35. Bei hohen Strömen kann dies zu einer Überhitzung bis hin zu einer thermischen Zerstörung des Kraftfahrzeugkabelbaums 20, insbesondere der elektrischen Leitung 21, im zweiten Abschnitt 40 führen.

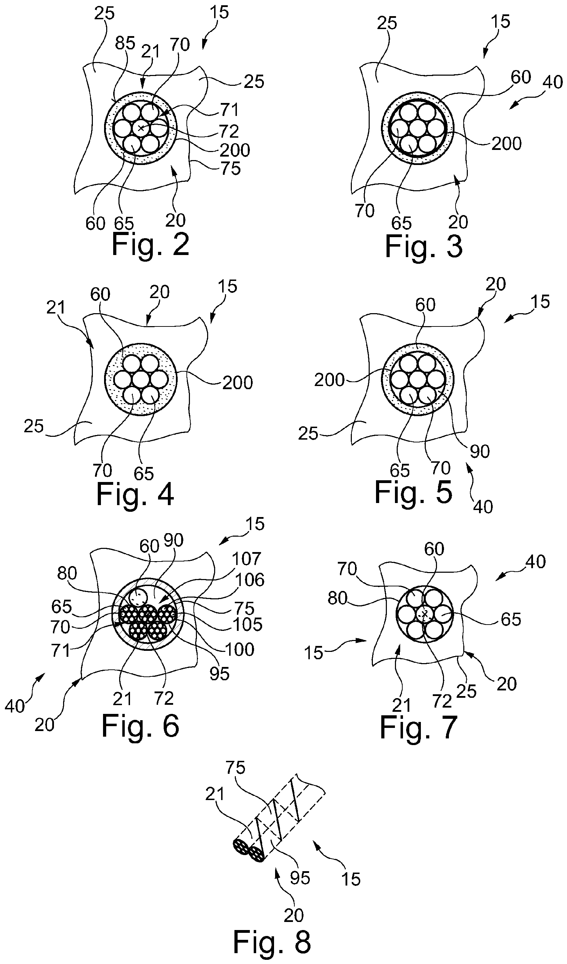

Figur 2 zeigt eine Schnittansicht durch die Anordnung 15 entlang einer in Figur 1 gezeigten Schnittebene A-A mit dem in Figur 1 gezeigten Kraftfahrzeugkabelbaum 20.

Der Kraftfahrzeugkabelbaum 20 umfasst neben der elektrischen Leitung 21 eine Ummantelung 75. Die Ummantelung 75 umgreift die elektrische Leitung 21 umfangsseitig. Die Ummantelung 75 umfasst im zweiten Abschnitt 40 einen Latentwärmespeicher 60 und einen Träger 200. Auf den Latentwärmespeicher 60 wird im ersten Abschnitt 35 verzichtet.

Die elektrische Leitung 21 weist einen ersten elektrischen Leiter 65 und einen zweiten elektrische Leiter 70 auf, die in einem Leitungsbündel 71 zusammengefasst angeordnet sind. Selbstverständlich kann der erste elektrische Leiter 65 auch als Einzeldraht ausgebildet sein und auf den zweiten elektrischen kann Leiter 70 verzichtet werden. Auch kann der elektrische Leiter 65, 70 feindrähtig oder feinstdrähtig ausgebildet sein, sodass die elektrische Leitung 21 eine andere als in Figur 2 gezeigte Anzahl von elektrischen Leitern 65, 70 aufweist.

Der Latentwärmespeicher 60 ist beispielhaft schlauchförmig ausgebildet und begrenzt innenseitig einen Innenraum 90. In dem Innenraum ist das Leitungsbündel 71 angeordnet.

Der Träger 200 erstreckt sich über die beiden Abschnitte 35, 40 des Kraftfahrzeugkabelbaums 20. Der Träger 200 weist vorzugsweise ein Dielektrikum auf. Der Träger 200 stützt mechanisch den Latentwärmespeicher 60 und die elektrische Leitung 21 und schützt diese vor mechanischer Beschädigung.

Im zweiten Abschnitt 40 ist der Träger 200 radial außenseitig auf einer äußeren Umfangsfläche 85 des Latentwärmespeichers 60 angeordnet, sodass der Latentwärmespeicher 60 radial bezogen auf eine Längsachse 72 des Kraftfahrzeugkabelbaums 20 zwischen der elektrischen Leitung 21 und der Isolierschicht 80 angeordnet ist. Dabei isoliert der Träger 200 den elektrischen Leiter 65, 70 elektrisch gegenüber dem Dämmmaterial 25. Im ersten Abschnitt 35 (nicht in Figur 2 dargestellt) ist der Träger 200 radial angrenzend an den elektrischen Leiter 65, 70 angeordnet.

Bei dem Fehlerfall wird ein Signal mit einer für die elektrischen Leitung 21 zu hohen elektrischen Energie übertragen. Dies führt zu einer rapiden Erwärmung des zweiten Abschnitts 40 so lange bis die Sicherheitseinrichtung 56 eingreift/anspricht und die Signalübertragung bzw. elektrische Verbindung zwischen dem Steuergerät 50 und dem Verbraucher 55 unterbricht. Der Latentwärmespeicher 60 nimmt im zweiten Abschnitt 40 im Zeitintervall durch die elektrische Leitung 21 eingebrachte Wärme zumindest teilweise, vorzugweise überwiegend, insbesondere zu wenigstens 80 Prozent, auf und verhindert eine Überhitzung des Kraftfahrzeugkabelbaums 20, insbesondere der elektrischen Leitung 21, im zweiten Abschnitt 40.

Im ersten Abschnitt 35 wird die Wärme der elektrischen Leitung 21 direkt an eine Umgebung, beispielsweise an eine Fahrzeugkarosserie des Kraftfahrzeugs 10, abgeleitet. Dadurch kann der Kraftfahrzeugkabelbaum 20 besonders leicht und kostengünstig ausgebildet werden. Auch kann der Kraftfahrzeugkabelbaum 20 besonders einfach, insbesondere im ersten Abschnitt 35 im Kraftfahrzeug 10, verlegt werden.

Besonders von Vorteil ist in Figur 2, dass der Latentwärmespeicher 60 direkt angrenzend an den elektrischen Leiter 65, 70 angeordnet ist. Diese Ausgestaltung hat den Vorteil, dass ein Weg zum Transport von Wärme aus dem elektrischen Leiter 65, 70 zum Latentwärmespeicher 60 besonders kurz ist.

Von besonderem Vorteil ist, wenn der Latentwärmespeicher 60 wenigstens einen der folgenden Werkstoffe aufweist: aliphatischen Kohlenwasserstoff, vorzugsweise mit 16 oder 17 oder 18 Kohlenstoffatomen, Salz, ionische Flüssigkeit, mikroverkapseltes Hartparaffin, Hartparaffin, thermochemischen Wärmespeicher.

Von besonderem Vorteil ist, wenn der Werkstoff des Latentwärmespeicher 60 derart gewählt ist, dass im Regelbetrieb der Werkstoff des Latentwärmespeichers sich in einem ersten Phasenzustand, beispielsweise einem festen Phasenzustand, befindet. Nach Auftreten des Fehlerfalls wird der Latentwärmespeicher 60 (vorzugsweise in dem Zeitintervall bis Ansprechen der Sicherungseinrichtung 56) so stark erwärmt, dass der Werkstoff vom ersten Phasenzustand in den vorzugsweise nächst höheren zweiten Phasenzustand ändert. So schmilzt beispielsweise der Werkstoff des Latentwärmespeichers 60 nach dem Fehlerfall auf. Durch den Phasenwechsel kann der Latentwärmespeicher 60 besonders viel Wärme aus der elektrischen Leitung 21 aufnehmen und speichern. Dadurch wird eine Beschädigung des Kraftfahrzeugkabelbaums 30 vermieden. Dadurch dass der Latentwärmespeicher 60 einen Phasenwechsel durchführt, kann ferner die Temperatur in dem zweiten Abschnitt niedriger gehalten werden, als wenn der Latentwärmespeicher keinen Phasenwechsel durchführen würde.

Von besonderem Vorteil ist, wenn der Werkstoff des Latentwärmespeichers 60 so gewählt ist und der Latentwärmespeicher 60 so zu der elektrischen Leitung 21 angeordnet ist, dass der Latentwärmespeichers 60 den Phasenwechsel innerhalb des Zeitintervalls durchführt.

Nach Ansprechen der Sicherungseinrichtung 56 wird der Latentwärmespeicher 60 solange von der elektrischen Leitung 21 noch erwärmt, bis beide das gleiche Temperaturniveau haben. Dabei ist von besonderem Vorteil, wenn dies im Wesentlichen die Schmelztemperatur des Werkstoffs des Latentwärmespeichers 60 ist. Im Anschluss daran kühlt der Latentwärmespeicher 60 und die elektrisch Leitung 21 ab und geben die gespeicherte Wärme über das Dämmmaterial 25 an die Umgebung ab. Dabei wechselt der Werkstoff des Latentwärmespeichers 60 wieder in den ursprünglichen Phasenzustand zurück.

Figur 3 zeigt einen Querschnitt entlang einer in Figur 1 gezeigten Schnittebene A-A durch eine Anordnung 15 mit einem Kraftfahrzeugkabelbaum 20 gemäß einer zweiten Ausführungsform.

Der Kraftfahrzeugkabelbaum 20 ist ähnlich zu dem in Figur 2 gezeigten Kraftfahrzeugkabelbaum 20 ausgebildet. Abweichend dazu ist der Träger 200 in radialer Richtung zwischen dem ersten elektrischen Leiter 65 und dem Latentwärmespeicher 60 angeordnet. Diese Ausgestaltung hat den Vorteil, dass in einem separaten Verfahrensschritt der Latentwärmespeicher 60 in Abhängigkeit der geometrischen Ausgestaltung des zweiten Abschnitts 40 am Kraftfahrzeugkabelbaum 20 angeordnet werden kann. Dadurch wird eine besonders hohe Fertigungsflexibilität für die Anordnung 15 gewährleistet.

Figur 4 zeigt einen Querschnitt entlang einer in Figur 1 gezeigten Schnittebene A-A durch eine Anordnung 15 mit einem Kraftfahrzeugkabelbaum 20 gemäß einer dritten Ausführungsform.

Der Kraftfahrzeugkabelbaum 20 ist ähnlich zu dem in den Figuren 1 bis 3 gezeigten Kraftfahrzeugkabelbaum 20 ausgebildet. Die elektrischen Leiter 65, 70 und der Latentwärmespeicher 60 sind in dem Träger 200 vollständig eingebettet. Dadurch wird ein fester Verbund des elektrischen Leiters 65, 70 und des Latentwärmespeichers 60 bereitgestellt und es wird eine unerwünschte Dislokation des Latentwärmespeichers 60 und/oder des elektrischen Leiters 65, 70 relativ zueinander vermieden. Auch wird ein zuverlässiger Schutz des elektrischen Leiters 65, 70 und des Latentwärmespeichers 60 in dem Träger 200 gewährleistet.

Besonders von Vorteil ist bei in der Figur 4 gezeigten Ausgestaltung, wenn der Latentwärmespeicher 60 mehrteilig ausgebildet ist. Insbesondere ist von Vorteil, wenn der Latentwärmespeicher 60 Partikelmaterial, das im Träger 200 eingebettet ist, aufweist. Besonders von Vorteil ist, wenn das Partikelmaterial wenigstens einen der folgenden Werkstoffe aufweist: mikroverkapseltes Paraffin, insbesondere Hartparaffin, Metall. Besonders von Vorteil ist ferner, wenn der Träger 200 wenigstens einen der folgenden Werkstoffe aufweist: Thermoplast, Polyolefine, Polyvinylidenfluorid, Polyvinylchlorid, Polytetrafluorethylen, Fluorelastomer, Polyisobutylen, faserverstärkten Kunststoff, offenporigen Schaum, geschlossenporigen Schaum, Schaum. Vorteilhafterweise weist der Latentwärmespeicher 60 eine Größe, vorteilhafterweise eine Korngröße kleiner 50pm und größer 150 pm aufweist, wobei vorteilhafterweise die Größe in einem Bereich von 5 µm bis 20 µm liegt.

Figur 5 zeigt einen Querschnitt entlang einer in Figur 1 gezeigten Schnittebene A-A durch eine Anordnung 15 mit einem Kraftfahrzeugkabelbaum 20 gemäß einer vierten Ausführungsform.

Der Kraftfahrzeugkabelbaum 20 ist ähnlich zu dem in Figur 4 gezeigten Kraftfahrzeugkabelbaum 20 ausgebildet. Abweichend dazu ist der Träger 200 hohlzylinderförmig ausgebildet. Der Träger 200 umschließt den Innenraum 90. Die elektrische Leitung 21 ist in dem Innenraum 90 angeordnet. Der Latentwärmespeicher 60 ist in dem Träger 200 mit eingebettet.

Von besonderem Vorteil ist, wenn die Ummantelung 75 schrumpfschlauchartig ausgebildet ist, sodass sich ein Werkstoff des Trägers 200 bei einer einmaligen Erwärmung zumindest um einen Faktor 2 zusammenzieht. Dadurch wird eine zuverlässige Fixierung und gleichzeitig eine nahe Anordnung des in dem Träger 200 eingebetteten Latentwärmespeichers 60 an der elektrischen Leitung 21 sichergestellt.

Figur 6 zeigt einen Querschnitt entlang einer in Figur 1 gezeigten Schnittebene A-A durch eine Anordnung 15 mit einem Kraftfahrzeugkabelbaum 20 gemäß einer fünften Ausführungsform.

Der Kraftfahrzeugkabelbaum 20 ist ähnlich zu dem in den Figuren 1 bis 5 gezeigten Kraftfahrzeugkabelbaum ausgebildet.

Der Kraftfahrzeugkabelbaum 20 umfasst neben der elektrischen Leitung 21 eine weitere elektrische Leitung 95. Die elektrische Leitung 21 umfasst eine Isolierschicht 80. Die Isolierschicht 80 umgreift das Leitungsbündel 71 umfangsseitig. Die Isolierschicht 80 isoliert elektrisch den elektrischen Leiter 65, 70 gegenüber der weiteren elektrischen Leitung 95. Die weitere elektrische Leitung 95 umfasst einen dritten elektrischen Leiter 105, beispielhaft einen vierten elektrischen Leiter 106, die in einem weiteren Leitungsbündel 107 zusammengefasst sind, und eine weitere Isolierschicht 100. Auch kann auf den vierten elektrischen Leiter 106 verzichtet werden.

Die weitere Isolierschicht 100 umgreift das weitere Leitungsbündel 107. Die weitere Isolierschicht 100 isoliert elektrisch den dritten elektrischen Leiter 105 gegenüber der elektrischen Leitung 21. Die weitere elektrische Leitung 95 ist vorzugsweise parallelverlaufend zu der elektrischen Leitung 21 angeordnet.

Der Latentwärmespeicher 60 ist in der Ausführungsform nicht, wie in den Figuren 2 bis 5 gezeigt, Teil der Ummantelung 75. Der Latentwärmespeicher 60 ist zylinderförmig ausgebildet und folgt im Wesentlichen einem Verlauf der elektrischen Leitung 21, 95. Der Latentwärmespeicher 60, die elektrische Leitung 21 und die weitere elektrische Leitung 95 sind im Innenraum 90 des Trägers 200 angeordnet.

Der Träger 200 fixiert den Latentwärmespeicher 60, die elektrische Leitung 21 und die weitere elektrische Leitung 95 aneinander und schützt den Latentwärmespeicher 60, die elektrische Leitung 21 und die weitere elektrische Leitung 95 vor Umwelteinflüssen. Ferner wird auf diese Weise ein Abstand des Latentwärmespeichers 60 hin zur elektrischen Leitung 21, 95 gering gehalten, sodass der Latentwärmespeicher 60 sowohl aus der elektrischen Leitung 21 als auch aus der weiteren elektrischen Leitung 95 Wärme aufnehmen kann, um ein Überhitzen der elektrischen Leitung 21 und der weiteren elektrischen Leitung 95 zu verhindern. Dadurch kann der Kraftfahrzeugkabelbaum 20 besonders kostengünstig ausgebildet werden, da nur ein Latentwärmespeicher 60 für mehrere elektrische Leitungen 21, 95 vorzusehen ist. Ferner wird ein Gewicht des Kraftfahrzeugkabelbaums 20 niedrig gehalten.

Der Träger 200 kann beispielsweise bandartig ausgebildet und schraubenförmig um die Längsachse 72 geführt sein. Alternativ ist denkbar, dass die elektrische Leitung 21, der Latentwärmespeicher 60 und die weitere elektrische Leitung 95 in dem Träger 200 eingebettet sind. Bevorzugterweise weist hierbei der Träger 200 einen Schaum als Werkstoff auf.

Figur 7 zeigt einen Querschnitt entlang einer in Figur 1 gezeigten Schnittebene A-A durch eine Anordnung 15 mit einem Kraftfahrzeugkabelbaum 20 gemäß einer sechsten Ausführungsform.

Der Kraftfahrzeugkabelbaum 20 ist als eine Kombination aus dem in den Figuren 2 und 6 gezeigten Kraftfahrzeugkabelbaum 20 ausgebildet. Abweichend dazu ist der Latentwärmespeicher 60 nicht Teil der Ummantelung 75, sondern Teil der elektrischen Leitung 21. Der Latentwärmespeicher 60 ist zylindrisch ausgebildet. Dabei ist der Latentwärmespeicher 60 zentrisch entlang der Längsachse 72 des Kraftfahrzeugkabelbaums 20 verlaufend angeordnet. Der Latentwärmespeicher 60 ist zu dem ersten elektrischen Leiter 65 und dem zweiten elektrischen Leiter 70 zentrisch angeordnet und bildet eine Seele der elektrischen Leitung 21 aus. Dadurch kann Wärme aus dem elektrischen Leiter 65, 70 von jedem, vorzugsweise auf einer Kreisbahn um den Latentwärmespeicher 60 herum angeordneten elektrischen Leiter 65, 70 aufgenommen werden. Der Träger 200 ist umfangsseitig der elektrischen Leiter 65, 70 angeordnet und bündelt die elektrischen Leiter 65, 70 zu dem Leitungsbündel 71 und fixiert den Latentwärmespeicher 60 zwischen den elektrischen Leitern 65, 70.

Auch ist denkbar, dass die elektrischen Leiter 65, 70 und der Latentwärmespeicher 60 in dem Träger 200, ähnlich wie in Figur 4 gezeigt, eingebettet sind.

Figur 8 zeigt eine perspektivische Darstellung eines Ausschnitts des zweiten Abschnitts 40 eines Kraftfahrzeugkabelbaums 20 gemäß einer siebten Ausführungsform.

Der Kraftfahrzeugkabelbaum 20 ist ähnlich zu dem in Figuren 5 und 6 gezeigten Kraftfahrzeugkabelbaum 20 ausgebildet.

Der Kraftfahrzeugkabelbaum 20 weist beispielhaft die erste und die zweite elektrische Leitung 21, 95 auf, um die die Ummantelung 75 in einer Wickelrichtung gewickelt ist. Die Ummantelung 75 fixiert die beiden elektrischen Leitungen 21, 95 aneinander.

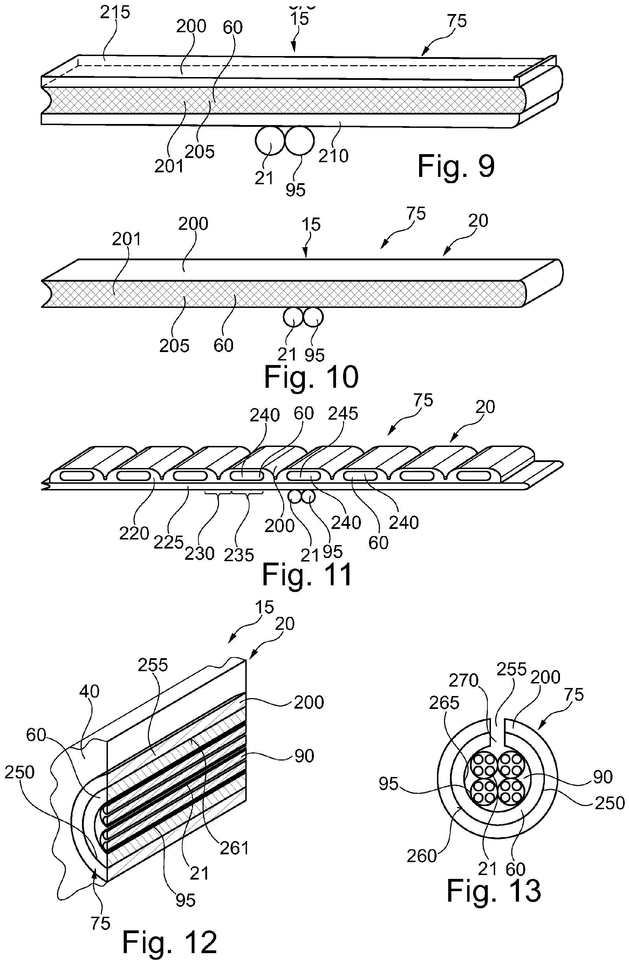

Figur 9 zeigt eine perspektivische Schnittansicht einer Abwicklung des in Figur 8 gezeigten zweiten Abschnitts 40 des Kraftfahrzeugkabelbaums 20.

Die Ummantelung 75 ist beispielhaft bandartig ausgebildet. Die Ummantelung 75 weist den Träger 200 auf. Der Träger 200 weist vorzugsweise eine Trägermatrix 201 auf. Die Trägermatrix 201 kann einen geschlossenporigen Werkstoff mit wenigstens einer Pore 205 auf. In der Pore 205 der Trägermatrix 201 ist der Latentwärmespeicher 60 angeordnet. Durch die geschlossenporige Ausgestaltung der Trägermatrix 206 wird der Latentwärmespeicher 60 durch die Trägermatrix 206 in der Ummantelung 75 sowohl in flüssigem als auch in festem Zustand fixiert.

Zusätzlich weist die Ummantelung 75 beispielhaft eine Klebschicht 210 auf. Die Klebschicht 210 ist in montiertem Zustand des Kraftfahrzeugkabelbaums 20 zwischen der elektrischen Leitung 21, 95 und dem Träger 200 angeordnet und verbindet stoffschlüssig den Träger 200 mit der elektrischen Leitung 21, 95. Dadurch kann die Ummantelung 75 besonders gut die elektrische Leitungen 21, 95 miteinander fixieren und ein unbeabsichtigtes Lösen des Trägers 200 von der elektrischen Leitung 21, 95 wird vermieden. Dabei kann gegenüber der in Figur 6 und 7 gezeigten Ausgestaltung des Kraftfahrzeugkabelbaums 20 auf den zylinderförmig ausgestalteten Latentwärmespeicher 60 verzichtet werden. Insbesondere kann bei der Herstellung des Kraftfahrzeugkabelbaums 20 besonders flexibel durch die entsprechende Wahl der Ummantelung 75 der Kraftfahrzeugkabelbaum 20 für den ersten Abschnitt 35 (durch Wahl einer Ummantelung 75 ohne Latentwärmespeicher 60 im Träger 200) und den zweiten Abschnitt 40 (mit einer Ummantelung 75 wie in Figur 9 gezeigt) angepasst werden.

Selbstverständlich ist auch denkbar, dass die in Figur 9 gezeigte Ummantelung 75 in Figur 6 verwendet wird, um den zylinderförmigen Latentwärmespeicher 60 an der elektrischen Leitung 21, 95 zu fixieren. Dadurch kann eine besonders hohe Wärmespeicherfähigkeit im zweiten Abschnitt 40 des Kraftfahrzeugkabelbaums 20 bereitgestellt werden und eine Überhitzung des zweiten Abschnitts 40 des Kraftfahrzeugkabelbaums 20 vermieden werden.

Zusätzlich kann die Ummantelung 75 eine Schutzschicht 215 aufweisen. Die Schutzschicht 215 ist auf dem Träger 200 auf einer zur Klebschicht 210 und zur elektrischen Leitung 21, 95 abgewandten Seite angeordnet. Die Schutzschicht 215 schützt den Träger 200 vor mechanischer Beschädigung.

Gegenüber der in Figur 9 gezeigten Ausgestaltung der Ummantelung 75 ist auch denkbar, dass die Ummantelung 75 schlauchartig und/oder schalenartig und/oder U-förmig und/oder in Längsrichtung wellenartig ausgebildet ist.

Figur 10 zeigt eine perspektivische Schnittansicht einer Abwicklung einer Anordnung 15 mit einem Kraftfahrzeugkabelbaum 20 gemäß einer achten Ausführungsform im zweiten Abschnitt 40.

Die Ummantelung 75 ist ähnlich zu der in Figur 9 gezeigten Ummantelung 75 ausgebildet. Abweichend dazu weist die Trägermatrix 201 einen offenporigen Werkstoff auf, wobei der offenporige Werkstoff mit dem Latentwärmespeicher 60 imprägniert ist. Ferner wird in Figur 10 beispielhaft auf die Schutzschicht 215 und die Klebschicht 210 verzichtet. Selbstverständlich kann aber auch die Klebschicht 210 und/oder die Schutzschicht 215 vorgesehen sein.

Figur 11 zeigt eine perspektivische Schnittansicht einer Abwicklung einer Anordnung 15 mit einem Kraftfahrzeugkabelbaum 20 gemäß einer neunten Ausführungsform im zweiten Abschnitt 40.

Die Ummantelung 75 ist bandartig ausgebildet. Der Träger 200 weist eine erste Trägerschicht 220 und eine zweite Trägerschicht 225 auf. Die erste Trägerschicht 220 und die zweite Trägerschicht 225 sind in einem ersten Trägerabschnitt 230 miteinander verbunden. In einem zweiten Trägerabschnitt 235, der in der Ausführungsform beispielhaft angrenzend an den ersten Trägerabschnitt 230 angrenzt, ist die erste Trägerschicht 220 beabstandet zur zweiten Trägerschicht 225 angeordnet. Die erste Trägerschicht 220 bildet mit der zweiten Trägerschicht 225 im zweiten Trägerabschnitt 230 eine Tasche 240 aus.

In der Ausführungsform wechseln sich der erste Trägerabschnitt 230 und der zweite Trägerabschnitt 235 in Wickelrichtung der Ummantelung 75 ab, sodass mehrere Taschen 240 beabstandet zueinander angeordnet sind. In jeder Tasche 240 ist jeweils ein Latentwärmespeicher 60 angeordnet. Von besonderem Vorteil ist, wenn die Tasche 240 seitlich (in Querrichtung zur Wickelrichtung der Ummantelung 75) fluiddicht abgedichtet ist. Dies kann beispielsweise dadurch erfolgen, indem die erste Trägerschicht 220 mit der zweiten Trägerschicht 225 verbunden ist. Auf diese Weise wird ein Verlust des Latentwärmespeichers 60 aus der Tasche 240 zuverlässig vermieden.

Figur 12 zeigt einen Halblängsschnitt durch eine Anordnung 15 mit einem Kraftfahrzeugkabelbaum 20 gemäß einer zehnten Ausführungsform. Der Kraftfahrzeugkabelbaum 20 ist ähnlich zu der in den Figuren 2 und 6 gezeigten Ausgestaltung des Kraftfahrzeugkabelbaums 20 ausgebildet.

Der Träger 200 der Ummantelung 75 ist schalenartig ausgebildet und weist eine erste Aussparung 250 auf. Die erste Aussparung 250 verläuft dabei in Längsrichtung des Kraftfahrzeugkabelbaums 20 im zweiten Abschnitt 40. Die erste Aussparung 250 weist beispielhaft einen kreisförmigen Querschnitt auf. Die erste Aussparung 250 ist innenseitig des Trägers 200 auf einer zur elektrischen Leitung 21, 95 zugewandten Seite angeordnet. Ferner weist der Träger 200 eine erste Einlegeöffnung 255 auf, die schlitzförmig ausgebildet ist und sich in Längsrichtung des zweiten Abschnitts 40 erstreckt.

Der Latentwärmespeicher 60 ist ebenso schalenartig ausgebildet. Dabei ist an einer äußeren Umfangsfläche 260 der Latentwärmespeicher 60 korrespondierend zur ersten Aussparung 250 ausgebildet. Mit der äußeren Umfangsfläche 260 liegt der Latentwärmespeicher 60 an einer inneren Umfangsfläche 261 der ersten Aussparung 250 des Trägers 200 an.

Ferner weist der Latentwärmespeicher 60 eine zweite Aussparung 265 auf. Die zweite Aussparung 265 begrenzt den Innenraum 90. In der zweiten Aussparung 265 ist die elektrische Leitung 21, 95 eingelegt, sodass der Latentwärmespeicher 60 radial zwischen dem Träger 200 und der elektrischen Leitung 21, 95 angeordnet ist. Des Weiteren umfasst der Latentwärmespeicher 60 eine zweite Einlegeöffnung 270. Die zweite Einlegeöffnung 270 erstreckt sich in Längsrichtung des zweiten Abschnitts 40.

Figur 13 zeigt einen Querschnitt durch den in Figur 12 gezeigten zweiten Abschnitt 40 des Kraftfahrzeugkabelbaums 20.

Die erste Einlegeöffnung 255 und die zweite Einlegeöffnung 270 sind in Umfangsrichtung überlappend angeordnet. Auf diese Weise wird zum einen sichergestellt, dass der Latentwärmespeicher 60 zuverlässig durch Träger 200 positioniert wird und zum anderen über die Einlegeöffnung 255, 270 auf einfache Weise die elektrische Leitung 21, 95 in den Innenraum 90 eingelegt werden kann. Dabei ist von besonderem Vorteil, wenn die Einlegeöffnung 255, 270 schmaler ist als die elektrische Leitung 21, 95. Auf diese Weise wird sichergestellt, dass ein ungewolltes Herausrutschen der elektrischen Leitung 21, 95 aus dem durch den Latentwärmespeicher 60 umschlossenen Innenraum 90 über die Einlegeöffnung 255, 270 vermieden wird. Ferner wird durch die korrespondierende Ausgestaltung der äußeren Umfangsfläche 260 zu der ersten Aussparung 250 der Ummantelung 75 ein Verrutschen des Latentwärmespeichers 60 und gleichzeitig eine zuverlässige Positionierung der elektrischen Leitung 21, 95 innerhalb des Innenraums 90 sichergestellt.

### Bezugszeichenliste

- 10: Kraftfahrzeug
- 15: Anordnung
- 20: Kabelbaum
- 21: elektrische Leitung
- 25: Material
- 30: Fahrgastinnenraum
- 31: Motorraum
- 35: erster Abschnitt
- 40: zweiter Abschnitt
- 45: elektrische Einrichtung
- 50: erste Komponente
- 55: zweite Komponente
- 56: Sicherungseinrichtung
- 60: Latentwärmespeicher
- 65: erster elektrischer Leiter
- 70: zweiter elektrischer Leiter
- 71: Leitungsbündel
- 72: Längsachse des Kabelbaums
- 75: Ummantelung
- 80: Isolierschicht
- 85: äußere Umfangsfläche des Latentwärmespeichers
- 86: Trägermatrix
- 90: Innenraum
- 95: weitere elektrische Leitung
- 100: weitere Isolierschicht
- 105: dritter elektrische Leiter
- 106: vierter elektrische Leiter
- 107: weiterer Leitungsbündel

- 200: Träger
- 201: Trägermatrix
- 205: Pore
- 210: Klebschicht
- 215: Schutzschicht
- 220: erste Trägerschicht
- 225: zweite Trägerschicht
- 230: erster Trägerabschnitt
- 235: zweiter Trägerabschnitt
- 240: Tasche
- 245: weitere Tasche
- 250: erste Aussparung
- 255: erste Einlegeöffnung
- 260: äußere Umfangsfläche des Latentwärmespeichers
- 261: innere Umfangsfläche des Trägers
- 265: zweite Aussparung
- 270: zweite Einlegeöffnung

## Patentansprüche

1. Anordnung (15)
- aufweisend wenigstens eine elektrische Einrichtung (45) mit einer ersten Komponente und einer zweiten Komponente (55), und einen Kraftfahrzeugkabelbaum (20),
- wobei die zweite Komponente (55) einen elektrischen Verbraucher (50) und eine Sicherungseinrichtung (56) aufweist, wobei eine elektrische Leitung (21) des Kraftfahrzeugkabelbaums (20) den Verbraucher (50) mit der ersten Komponente (50) elektrisch verbindet,
- wobei die Sicherungseinrichtung (56) zwischen der ersten Komponente (50) und dem Verbraucher (55) angeordnet ist,
- wobei in einem Regelbetrieb die Sicherungseinrichtung (56) die erste Komponente (50) mit dem Verbraucher (55) elektrisch verbindet,
- wobei nach Auftreten eines Fehlerfalls die Sicherungseinrichtung (56) anspricht und die erste Komponente (50) elektrisch von dem Verbraucher (55) trennt,
- wobei in einem Zeitintervall zwischen Auftreten des Fehlerfalls bis zu dem Ansprechen der Sicherungseinrichtung (56) sich die elektrische Leitung (21) erwärmt,
- **dadurch gekennzeichnet, dass**
- der Kraftfahrzeugkabelbaum (20) einen ersten Abschnitt (35), einen zweiten Abschnitt (40) und wenigstens einen Latentwärmespeicher (60) aufweist,
- wobei im zweiten Abschnitt (40) der Latentwärmespeicher (60) angeordnet ist,
- wobei der Latentwärmespeicher (60) derart ausgebildet ist, dass ein Werkstoff des Latentwärmespeichers (60) von der Wärme der elektrischen Leitung (21, 95) derart erwärmt wird, dass der Werkstoff von einem ersten Phasenzustand, in dem der Werkstoff im Regelbetrieb vorliegt, in einen zweiten Phasenzustand innerhalb des Zeitintervalls zwischen Auftreten des Fehlerfalls bis zum Ansprechen der Sicherungseinrichtung, überführt wird, um eine Überhitzung der elektrischen Leitung (21) im zweiten Abschnitt (40) zu vermeiden.

2. Anordnung (115) nach Anspruch 1,
- wobei der Latentwärmespeicher (60) wenigstens einen der folgenden Werkstoffe aufweist:
- aliphatischen Kohlenwasserstoff,
- Salz,
- ionische Flüssigkeit,
- mikroverkapseltes Hartparaffin,
- Hartparaffin,
- thermochemischen Wärmespeicher,
- und/oder
- wobei der Latentwärmespeicher (60) eine Größe kleiner 50pm und größer 150 pm aufweist,
- wobei vorteilhafterweise die Größe in einem Bereich von 5 µm bis 20 µm liegt.

3. Anordnung (15) nach einem der vorhergehenden Ansprüche,
- wobei der Latentwärmespeicher (60) parallel verlaufend zur elektrischen Leitung (21, 95) angeordnet ist,
oder
- wobei der Latentwärmespeicher (60) schraubenförmig zur elektrischen Leitung (21, 95) verlaufend angeordnet ist,
oder
- der Latentwärmespeicher (60) einem Verlauf der elektrischen Leitung (21, 95) im Wesentlichen folgend ausgerichtet ist.

4. Anordnung (15) nach einem der vorhergehenden Ansprüche,
- wobei der Kraftfahrzeugkabelbaum (20) eine Ummantelung (75) aufweist,
- wobei die Ummantelung (75) einen Träger (200) umfasst,
- wobei die elektrische Leitung (21, 95) wenigstens einen elektrisch leitend ausgebildeten elektrischen Leiter (65, 70) umfasst,
- wobei der Träger (200) den elektrischen Leiter (65, 70) elektrisch isoliert,
- wobei der Latentwärmespeicher (60) zwischen der Isolierschicht (80) und dem elektrischen Leiter (65, 70) angeordnet ist,
- und/oder
- wobei der Träger (200) zwischen dem Latentwärmespeicher (60) und dem elektrischen Leiter (65, 70) angeordnet ist,
- und/oder wobei der Träger (200) wenigstens einen der folgenden Werkstoffe aufweist:
- Thermoplast,
- Polyolefin,
- Polyvinylidenfluorid,
- Polyvinylchlorid,
- Polytetrafluorethylen,
- Fluorelastomer,
- Polyisobutylen,
- wobei der Werkstoff ausgebildet ist, bei einer einmaligen Erwärmung sich zumindest um einen Faktor 2 zusammenzuziehen,
- faserverstärkten Kunststoff,
- Schaum,
- Polypropylen,
- Polyethylen,
- Vernetztes Polyethylen (PE-X),
- Polyurethan.

5. Anordnung (15) nach einem der vorhergehenden Ansprüche,
- wobei der Kraftfahrzeugkabelbaum (20) eine Ummantelung (75) aufweist,
- wobei die Ummantelung (75) einen Träger (200) aufweist,
- wobei der Träger (200) zumindest teilweise einen geschlossenporigen Werkstoff aufweist,
- wobei der Latentwärmespeicher (60) in dem Träger (200) angeordnet ist,

6. Anordnung (15) nach einem der vorhergehenden Ansprüche,
- wobei der Träger (200) zumindest teilweise einen offenporigen Werkstoff aufweist,
- wobei der Träger (200) mit dem Latentwärmespeicher (60) imprägniert ist.

7. Anordnung (15) nach einem der Ansprüche 4 bis 6,
- wobei die Ummantelung (75) eine Klebschicht (210) umfasst,
- wobei die Klebschicht (210) zwischen der elektrischen Leitung (21) und dem Träger (200) angeordnet ist und stoffschlüssig den Träger (200) mit der elektrischen Leitung (21) verbindet.

8. Anordnung (15) nach einem der Ansprüche 4 bis 7,
- wobei die Ummantelung (75) eine Schutzschicht (215) umfasst,
- wobei die Schutzschicht (215) auf dem Träger (200) auf einer zur elektrischen Leitung (21, 95) abgewandten Seite angeordnet ist.

9. Anordnung (15) nach einem der Ansprüche 4 bis 8,
- wobei die Ummantelung (75) bandartig und/oder schlauchartig und/oder schalenartig und/oder U-förmig und/oder in Längsrichtung wellenartig oder als Wellschlauch ausgebildet ist.

10. Anordnung (15) nach einem der Ansprüche 4 bis 9,
- wobei die Ummantelung (75) eine erste Einlegeöffnung (255) und der Latentwärmespeicher (60) eine zweite Einlegeöffnung (270) aufweisen,
- wobei die erste Einlegeöffnung (255) und die zweite Einlegeöffnung (270) in Umfangsrichtung überlappend angeordnet sind,
- wobei der Latentwärmespeicher (60) und die Ummantelung (75) die elektrische Leitung (21, 95) umfangsseitig zumindest teilweise umgreifen.

11. Anordnung (15) nach einem der Ansprüche 4 bis 10,
- wobei die Ummantelung (75) um die elektrischen Leitung (21, 95) gewickelt ist,
- wobei der Träger (200) wenigstens eine Tasche (240) aufweist,
- wobei in der Tasche (240) der Latentwärmespeicher (60) angeordnet ist,
- wobei der Träger (200) eine weitere Tasche (245) umfasst,
- wobei in der weiteren Tasche (245) ein weiterer Latentwärmespeicher (60) angeordnet ist,
- wobei die Tasche (240) und die weitere Tasche (245) in Längsrichtung der Ummantelung (75) beabstandet zueinander angeordnet sind.

12. Anordnung (15) nach Anspruch 11,
- wobei der Träger (200) eine erste Trägerschicht (220) und eine zweite Trägerschicht (225) umfasst,
- wobei die erste Trägerschicht (220) und die zweite Trägerschicht (225) in einem ersten Trägerabschnitt (230) miteinander verbunden sind,
- wobei zur Ausbildung der Tasche (240, 245) in einem zweiten Trägerabschnitt (235) die erste Trägerschicht (220) beabstandet zu der zweiten Trägerschicht (225) angeordnet ist.

13. Anordnung (15) nach einem der vorhergehenden Ansprüche,
- wobei die elektrische Leitung (21, 95) einen weiteren elektrischen Leiter (70) umfasst,
- wobei der Latentwärmespeicher (60) zwischen dem elektrischen Leiter (65) und dem weiteren elektrischen Leiter (70) angeordnet ist,
- wobei der Latentwärmespeicher (60) zentrisch zu dem elektrischen Leiter (65) und dem weiteren elektrischen Leiter (70) angeordnet ist, und/oder
- aufweisend eine weitere elektrische Leitung (95),
- wobei die elektrische Leitung (21) und die weitere elektrische Leitung (95) bündelartig verlaufend angeordnet sind,
- wobei angrenzend an die elektrische Leitung (21) und/oder an die weitere elektrische Leitung (95) der Latentwärmespeicher (60) angeordnet ist.

14. Anordnung (15) nach einem der vorhergehenden Ansprüche,
- mit einem wärmedämmenden und/oder schalldämmenden Dämmmaterial (25) wobei der erste Abschnitt (35) von dem Dämmmaterial (25) beabstandet angeordnet ist und der zweite Abschnitt (40) in dem Dämmmaterial (25) eingebettet ist.

15. Verfahren zum Betrieb einer Anordnung (15),
- wobei eine Anordnung (15) nach einem der vorhergehenden Ansprüche bereitgestellt wird,
- wobei in einem Regelbetrieb die Sicherungseinrichtung (56) die erste Komponente (50) mit dem Verbraucher (55) elektrisch verbindet und elektrische Energie übertragen wird,
- wobei nach Auftreten eines Fehlerfalls die Sicherungseinrichtung (56) anspricht und die erste Komponente (50) elektrisch von der zweiten Komponente (55) trennt,
- wobei in einem Zeitintervall zwischen Auftreten des Fehlerfalls bis zu dem Ansprechen der Sicherungseinrichtung (56) sich die elektrische Leitung (21) erwärmt,
- wobei innerhalb des Zeitintervalls zwischen Auftreten des Fehlerfalls bis zum Ansprechen der Sicherungseinrichtung (56), ein Werkstoff des Latentwärmespeichers (60) von der Wärme der elektrischen Leitung (21, 95) derart erwärmt wird, dass der Werkstoff von einem ersten Phasenzustand, in dem der Werkstoff im Regelbetrieb vorliegt, in einen zweiten Phasenzustand überführt wird.

## Claims

1. Assembly (15)
- having at least one electrical device (45) with a first component (50), a second component (55) and a safety device (56) and a motor vehicle wiring harness (20),
- the second component (55) having an electric load (55), an electric lead (21) of the motor vehicle cable harness (20) connecting the load electrically (55) to the first component (50),
- the safety device (56) being arranged between the first component (50) and the load (55),
- during normal operations, the safety device (56) connecting the first component (50) electrically to the load (55),
- upon the occurrence of a fault, the safety device (56) responding and isolating the first component (50) electrically from the load (55),
- the electric lead (21) being heated in a time interval between the occurrence of the fault and the response of the safety device (56),
- **characterized in that**
- the motor vehicle wiring harness (20) has a first section (35), a second section (40) and at least one latent heat accumulator (60),
- wherein the latent heat accumulator (60) is arranged in the second section (40),
- wherein the latent heat accumulator (60) is omitted in the first section (35),
- wherein the latent heat accumulator (60) is formed in such a way that a material of the latent heat accumulator (60) is heated by the heat from the electric lead (21, 95) in such a way that the material is changed from a first phase state, in which the material is present during normal operations, to a second phase state within the time interval between the occurrence of the fault and the response of the safety device, in order to avoid overheating of the electric lead (21) in the second section (40) .

2. Assembly (115) according to Claim 1,
- wherein the latent heat accumulator (60) has at least one of the following materials:
- aliphatic hydrocarbon,
- salt,
- ionic liquid,
- micro-encapsulated hard paraffin,
- hard paraffin
- thermochemical heat storage,
- and/or
- wherein the latent heat accumulator (60) has a size of less than 50 µm and greater than 150 pm,
- wherein the size advantageously lies in a range from 5 µm to 20 µm.

3. Assembly (15) according to one of the preceding claims,
- wherein the latent heat accumulator (60) is arranged extending parallel to the electric lead (21, 95),
or
- wherein the latent heat accumulator (60) is arranged extending helically relative to the electric lead (21, 95),
or
- the latent heat accumulator (60) is aligned substantially following a course of the electric lead (21, 95).

4. Assembly (15) according to one of the preceding claims,
- wherein the motor vehicle wiring harness (20) has a sheathing (75),
- wherein the sheathing (75) comprises a support (200),
- wherein the electric lead (21, 95) comprises at least one electrically conductive electric conductor (65, 70),
- wherein the support (200) isolates the electric conductor (65, 70) electrically,
- wherein the latent heat accumulator (60) is arranged between the insulating layer (80) and the electric lead (65, 70),
- and/or
- wherein the support (200) is arranged between the latent heat accumulator (60) and the electric lead (65, 70),
- and/or wherein the support (200) has at least one of the following materials:
- thermoplastic,
- polyolefin
- polyvinylidene fluoride,
- polyvinyl chloride,
- polytetrafluoroethylene,
- fluoroelastomer,
- polyisobutylene,
- wherein the material is designed to contract at least by a factor 2 when heated once,
- fibre-reinforced plastic,
- foam,
- polypropylene,
- polyethylene,
- cross-linked polyethylene (PE-X),
- polyurethane.

5. Assembly (15) according to one of the preceding claims,
- wherein the motor vehicle wiring harness (20) a sheathing (75),
- wherein the sheathing (75) has a support (200),
- wherein the support (200) has, at least partly, a closed-pore material,
- wherein the latent heat accumulator (60) is arranged in the support (200).

6. Assembly (15) according to one of the preceding claims,
- wherein the support (200) has, at least partly, an open-pore material,
- wherein the support (200) is impregnated with the latent heat accumulator (60).

7. Assembly (15) according to one of Claims 4 to 6,
- wherein the sheathing (75) comprises an adhesive layer (210),
- wherein the adhesive layer (210) is arranged between the electric lead (21) and the support (200) and connects the support (200) integrally to the electric lead (21).

8. Assembly (15) according to one of Claims 4 to 7,
- wherein the sheathing (75) comprises a protective layer (215),
- wherein the protective layer (215) is arranged on the support (200) on a side facing away from the electric lead (21, 95).

9. Assembly (15) according to one of Claims 4 to 8,
- wherein the sheathing (75) is strip-like and/or hose-like and/or shell-like and/or U-shaped and/or is corrugated in the longitudinal direction or formed as a corrugated hose.

10. Assembly (15) according to one of Claims 4 to 9,
- wherein the sheathing (75) has a first insertion opening (255) and the latent heat accumulator (60) has a second insertion opening (270),
- wherein the first insertion opening (255) and the second insertion opening (270) are arranged overlapping in the circumferential direction,
- wherein the latent heat accumulator (60) and the sheathing (75) engage at least partly circumferentially around the electric lead (21, 95) .

11. Assembly (15) according to one of Claims 4 to 10
- wherein the sheathing (75) is wound around the electric lead (21, 95),
- wherein the support (200) has at least one pocket (240),
- wherein the latent heat accumulator (60) is arranged in the pocket (240),
- wherein the support (200) comprises a further pocket (245),
- wherein a further latent heat accumulator (60) is arranged in the further pocket (245),
- wherein the pocket (240) and the further pocket (245) are arranged at a distance from each other in the longitudinal direction of the sheathing (75).

12. Assembly (15) according to Claim 11,
- wherein the support (200) comprises a first support layer (220) and a second support layer (225),
- wherein the first support layer (220) and the second support layer (225) are connected to each other in a first support section (230),
- wherein in order to form the pocket (240, 245) in a second support section (235), the first support layer (220) is arranged at a distance from the second support layer (225).

13. Assembly (15) according to one of the preceding claims,
- wherein the electric lead (21, 95) comprises a further electric conductor (70),
- wherein the latent heat accumulator (60) is arranged between the electric conductor (65) and the further electric conductor (70),
- wherein the latent heat accumulator (60) is arranged centrally relative to the electric conductor (65) and the further electric conductor (70), and/or
- having a further electric lead (95),
- wherein the electric lead (21) and the further electric lead (95) are arranged running in the manner of a bundle,
- wherein the latent heat accumulator (60) is arranged adjacent to the electric lead (21) and/or to the further electric lead (95).

14. Assembly (15) according to one of the preceding claims,
- having a heat-insulating and/or sound-insulating damping material (25), wherein the first section (35) is arranged at a distance from the damping material (25) and the second section (40) is embedded in the damping material (25).

15. Method for operating an assembly (15),
- wherein the assembly (15) is provided according to one of the preceding claims,
- wherein, during normal operation, the safety device (56) connects the first component (50) electrically to the load (55) and electrical energy is transmitted,
- wherein upon the occurrence of a fault, the safety device (56) responds and isolates the first component (50) electrically from the second component (55),
- wherein the electric lead (21) heats up in a time interval between the occurrence of the fault and the response of the safety device (56),
- wherein, within the time interval between the occurrence of the fault and the response of the safety device (56), a material of the latent heat accumulator (60) is heated by the heat of the electric lead (21, 95) in such a way that the material is changed from a first phase state, in which the material is present during normal operation, to a second phase state.

## Revendications

1. Système (15)
- comportant au moins un dispositif électrique (45) comprenant un premier composant (50), un second composant (55), un dispositif de sécurité (56), et un faisceau de câbles de véhicule (20),
- dans lequel le second composant (55) comprend un consommateur électrique (55), dans lequel un conducteur électrique (21) du faisceau de câbles de véhicule (20) relie électriquement le consommateur (55) au premier composant (50),
- dans lequel le dispositif de sécurité (56) est disposé entre le premier composant (50) et le consommateur (55),
- dans lequel, dans un mode de régulation, le dispositif de sécurité (56) relie électriquement le premier composant (50) au consommateur (55),
- dans lequel, après la survenue d'un défaut, le dispositif de sécurité (56) répond et sépare électriquement le premier composant (50) du consommateur (55),
- dans lequel la ligne électrique (21) chauffe au cours d'un intervalle de temps compris entre la survenue du défaut et la réponse du dispositif de sécurité (56),
- **caractérisé en ce que**
- le faisceau de câbles de véhicule (20) comporte une première partie (35), une seconde partie (40) et au moins un accumulateur de chaleur latente (60),
- dans lequel l'accumulateur de chaleur latente (60) est disposé dans la seconde partie (40),
- dans lequel l'accumulateur de chaleur latente (60) n'est pas présent dans la première partie (35),
- dans lequel l'accumulateur de chaleur latente (60) est conçu pour qu'un matériau de l'accumulateur de chaleur latente (60) soit chauffé par la chaleur de la ligne électrique (21, 95) de manière à ce que le matériau soit amené à passer d'un premier état de phase, dans lequel se trouve le matériau dans le mode de régulation, à un second état de phase au cours de l'intervalle de temps compris entre la survenue du défaut et la réponse du dispositif de sécurité, afin d'éviter une surchauffe de la ligne électrique (21) dans la seconde partie (40).

2. Système (115) selon la revendication 1,
- dans lequel l'accumulateur de chaleur latente (60) comprend au moins l'un des matériaux suivants :
- un hydrocarbure aliphatique,
- un sel,
- un liquide ionique,
- une paraffine dure microencapsulée,
- une paraffine dure,
- un accumulateur de chaleur thermochimique,
- et/ou
- dans lequel l'accumulateur de chaleur latente (60) présente une taille inférieure à 50 µm et supérieure à 150 pm,
- dans lequel la taille se situe avantageusement dans une plage de 5 µm à 20 µm.

3. Système (15) selon l'une des revendications précédentes,
- dans lequel l'accumulateur de chaleur latente (60) est disposé parallèlement à la ligne électrique (21, 95), ou
- dans lequel l'accumulateur de chaleur latente (60) est disposé de manière hélicoïdale par rapport à la ligne électrique (21, 95),
ou
- dans lequel l'accumulateur de chaleur latente (60) est orienté sensiblement suivant un trajet de la ligne électrique (21, 95).

4. Système (15) selon l'une des revendications précédentes,
- dans lequel le faisceau de câbles de véhicule (20) comporte une gaine (75),
- dans lequel la gaine (75) comprend un support (200),
- dans lequel la ligne électrique (21, 95) comprend au moins un conducteur électrique réalisé de manière électriquement conductrice (65, 70),
- dans lequel le support (200) isole électriquement le conducteur électrique (65, 70),
- dans lequel l'accumulateur de chaleur latente (60) est disposé entre la couche isolante (80) et le conducteur électrique (65, 70),
- et/ou
- dans lequel le support (200) est disposé entre l'accumulateur de chaleur latente (60) et le conducteur électrique (65, 70),
- et/ou dans lequel le support (200) comporte au moins l'un des matériaux suivants :
- un matériau thermoplastique,
- une polyoléfine,
- un polyfluorure de vinylidène,
- un polychlorure de vinyle,
- un polytétrafluoréthylène,
- un fluoroélastomère,
- un polyisobutylène,
- dans lequel le matériau est conçu pour se contracter d'au moins un facteur 2 lors d'un chauffage unique,
- une matière plastique renforcée par des fibres,
- une mousse,
- un polypropylène,
- un polyéthylène,
- un polyéthylène réticulé (PE-X),
- un polyuréthane.

5. Système (15) selon l'une des revendications précédentes,
- dans lequel le faisceau de câbles de véhicule (20) comporte une gaine (75),
- dans lequel la gaine (75) comporte un support (200),
- dans lequel le support (200) comporte au moins en partie un matériau à pores fermés,
- dans lequel l'accumulateur de chaleur latente (60) est disposé dans le support (200).

6. Système (15) selon l'une des revendications précédentes,
- dans lequel le support (200) comporte au moins en partie un matériau à pores ouverts,
- dans lequel le support (200) est imprégné avec l'accumulateur de chaleur latente (60).

7. Système (15) selon l'une des revendications 4 à 6,
- dans lequel la gaine (75) comprend une couche adhésive (210),
- dans lequel la couche adhésive (210) est disposée entre la ligne électrique (21) et le support (200) et relie par complémentarité de matériau le support (200) à la ligne électrique (21).

8. Système (15) selon l'une des revendications 4 à 7,
- dans lequel la gaine (75) comprend une couche de protection (215),
- dans lequel la couche de protection (215) est disposée sur le support (200) sur un côté tourné à l'opposé de la ligne électrique (21, 95).

9. Système (15) selon l'une des revendications 4 à 8,
- dans lequel la gaine (75) présente une forme de bande et/ou une forme de tube et/ou une forme de coquille et/ou une forme en U et/ou une forme ondulée dans la direction longitudinale ou la forme d'un tube ondulé.

10. Système (15) selon l'une des revendications 4 à 9,
- dans lequel la gaine (75) comporte une première ouverture d'insertion (255) et l'accumulateur de chaleur latente (60) comporte une seconde ouverture d'insertion (270),
- dans lequel la première ouverture d'insertion (255) et la seconde ouverture d'insertion (270) sont disposées de manière à se chevaucher dans la direction circonférentielle,
- dans lequel l'accumulateur de chaleur latente (60) et la gaine (75) entourent au moins en partie la ligne électrique (21, 95) du côté de la circonférence.

11. Système (15) selon l'une des revendications 4 à 10,
- dans lequel la gaine (75) est enroulée autour de la ligne électrique (21, 95),
- dans lequel le support (200) comporte au moins une poche (240),
- dans lequel l'accumulateur de chaleur latente (60) est disposé dans la poche (240),
- dans lequel le support (200) comprend une autre poche (245),
- dans lequel un autre accumulateur de chaleur latente (60) est disposé dans l'autre poche (245),
- dans lequel la poche (240) et l'autre poche (245) sont espacées l'une de l'autre dans la direction longitudinale de la gaine (75).

12. Système (15) selon la revendication 11,
- dans lequel le support (200) comprend une première couche de support (220) et une seconde couche de support (225),
- dans lequel la première couche de support (220) et la seconde couche de support (225) sont reliées l'une à l'autre dans une première partie de support (230),
- dans lequel la première couche de support (220) est espacée de la seconde couche de support (225) afin de former la poche (240, 245) dans une seconde partie de support (235).

13. Système (15) selon l'une des revendications précédentes,
- dans lequel la ligne électrique (21, 95) comprend un autre conducteur électrique (70),
- dans lequel l'accumulateur de chaleur latente (60) est disposé entre le conducteur électrique (65) et l'autre conducteur électrique (70),
- dans lequel l'accumulateur de chaleur latente (60) est disposé de manière centrale par rapport au conducteur électrique (65) et à l'autre conducteur électrique (70), et/ou
- comportant une autre ligne électrique (95),
- dans lequel la ligne électrique (21) et l'autre ligne électrique (95) sont disposées en faisceau,
- dans lequel l'accumulateur de chaleur latente (60) est disposé de manière adjacente à la ligne électrique (21) et/ou à l'autre ligne électrique (95).

14. Système (15) selon l'une des revendications précédentes,
- comprenant un matériau calorifuge et/ou insonorisant (25), dans lequel la première partie (35) est espacée du matériau isolant (25) et la seconde partie (40) est noyée dans le matériau isolant (25).

15. Procédé d'exploitation d'un système (15),
- dans lequel le système (15) est fourni selon l'une des revendications précédentes,
- dans lequel, dans un mode de régulation, le dispositif de sécurité (56) relie électriquement le premier composant (50) au consommateur (55) et de l'énergie électrique est transmise,
- dans lequel, après la survenue d'un défaut, le dispositif fusible (56) répond et sépare électriquement le premier composant (50) du second composant (55),
- dans lequel la ligne électrique (21) chauffe au cours d'un intervalle de temps compris entre la survenue du défaut et la réponse du dispositif de sécurité (56),
- dans lequel un matériau de l'accumulateur de chaleur latente (60) est chauffé par la chaleur de la ligne électrique (21, 95) au cours de l'intervalle de temps compris entre la survenue du défaut et la réponse du dispositif de sécurité (56) de manière à ce que le matériau soit amené à passer d'un premier état de phase, dans lequel se trouve le matériau dans le mode de régulation, à un second état de phase.
